# EUROPÄISCHE PATENTSCHRIFT

(11) **EP 3 425 217 B1**
(45) Veröffentlichungstag und Bekanntmachung des Hinweises auf die Patenterteilung: **02.09.2020**
(21) Anmeldenummer: 18000577.9
(22) Anmeldetag: 05.07.2018
(51) Int. Cl.: F16B 7/10

(54) **RASTBOLZEN FÜR EIN STATIV**
LOCKING PIN FOR TRIPOD
BOULONS D'ARRÊT POUR UN TRÉPIED

(30) Priorität: 07.07.2017 DE 202017104066 U
(43) Veröffentlichungstag der Anmeldung: 09.01.2019
(73) Patentinhaber: Thomann GmbH, 96138 Burgebrach (DE)
(72) Erfinder: Brandl, Matthias, 96052 Bamberg (DE)
(74) Vertreter: Gleim, Christian Ragnar

(56) Entgegenhaltungen:
- EP-A2- 2 175 093
- CN-A- 101 858 380
- CN-B- 101 469 757
- US-A- 4 165 854
- US-A- 5 433 552

## Beschreibung

Die Erfindung betrifft einen Rastbolzen für ein Stativ zum Aufstellen von Musikboxen.

Beim Aufstellen von Musikboxen auf Stativen ist es wünschenswert die Musikboxen in einer vorbestimmten Höhe zu fixieren. Dafür bieten konventionelle Stative mit Teleskopbeinen die Möglichkeit die abschnittweise ineinander eingeschobenen Teleskoprohre der Teleskopbeine zu sichern. Zur Sicherung können Fixierstifte in Lochbohrungen der Teleskoprohre eingesteckt werden, um ein Verschieben zu verhindern.

Diese Sicherung der Teleskoprohre gegen Verschieben hat den Nachteil, dass der Fixierstift durch äußeres Einwirken, wie zum Beispiel daran stoßen, unbeabsichtigt aus der Lochbohrung der Teleskoprohre herausbewegt werden kann. Gerade beim Einsatz von Musikboxen auf öffentlichen Veranstaltungen oder auf Bühnen kann die Sicherung leicht herausgeschoben und dadurch die Fixierung der Teleskopstangen zueinander gelöst werden.

Eine alternative Möglichkeit zur Sicherung bietet der Einsatz eines Rastbolzens anstelle eines Fixierstiftes. Rastbolzen sind aus dem Stand der Technik bekannt, wobei diese konventionellen Rastbolzen eine Führungshülse und einen Stellzapfen mit einem Sperrendabschnitt umfassen.

Dabei ist der Sperrendabschnitt derart ausgebildet, um in einem Loch, zum Beispiel in dem Stativ, in Eingriff zu gelangen. Konventionelle Rastbolzen umfassen zudem einen Zugknopf, mit dessen Hilfe der Stellzapfen axial zur Führungshülse bewegt werden kann. Die axiale Bewegung des Stellzapfens bringt den Sperrendabschnitt in eine aus der Führungshülse axial hervorstehende Sperrstellung, in welcher Sperrstellung der Sperrendabschnitt in einem Loch in Eingriff gelangt, oder in eine axial zurückgezogene Neutralstellung, in welcher Neutralstellung der Sperrendabschnitt nicht in einem Loch in Eingriff gelangt.

Aus der EP2175093 A2 ist ein Rastbolzen mit Verriegelungsmechanik bekannt, wo die Spannkraft der Stellfeder in die der Sperrstellung des Sperrendabschnitts entgegengesetzte Richtung gerichtet ist. Die CN101469757B offenbart eine Rastanordnung gemäß dem Oberbegriff des Anspruchs 1.

Es sind weiterhin Rastbolzen aus dem Stand der Technik bekannt, welche zusätzlich eine Stellfeder umfassen, die durch ihre Spannkraft den Sperrendabschnitt aus der Neutralstellung in die Sperrstellung treibt. Derartige Rastbolzen sind beispielsweise aus den Druckschriften DE 103 38 621 A1, DE 10 2008 047 041 A1, DE 295 19 311 U1, sowie DE 20 2015 005 678 U1 bekannt. Das Aufbringen einer der Spannkraft der Feder entgegen gerichtete Zugkraft ist notwendig, um den Sperrendabschnitt aus der Sperrstellung in die Neutralstellung zu bringen. Durch unbeabsichtigtes Aufbringen einer Zugkraft entgegen der Spannkraft der Feder zum Beispiel durch Anstoßen kann die Sicherung des Stativs durch den Rastbolzen aufgehoben werden und die Box nach unten rutschen.

Dieses Problem wird durch den unabhängigen Anspruch gelöst, welcher einen Rastbolzen für ein Stativ zum Aufstellen von Musikboxen bereitstellt, welcher es erlaubt das Stativ zuverlässig in einer eingestellten Position zu sichern.

Die Erfindung umfasst einen Rastbolzen für ein Stativ zum Aufstellen von Musikboxen. Dabei umfasst der Rastbolzen eine Führungshülse und einen Stellzapfen mit einem Sperrendabschnitt, der derart ausgebildet ist, um in einem Loch an dem Stativ in Eingriff zu gelangen. Ferner umfasst der Rastbolzen ein

Verschlussteil zur Arretierung des Stellzapfens in der Führungshülse. Die Führungshülse ist derart ausgebildet, um den Stellzapfen axial zur Führungshülse zu führen.

Gemäß einem bevorzugten technischen Aspekt umfasst der Stellzapfen eine vorstehende Anlagefläche. Die vorstehende Anlagefläche ist dabei an dem Sperrendabschnitt angeordnet.

Weiterhin vorteilhaft ist, wenn die Führungshülse eine innenliegende Führungsbohrung zur Aufnahme des Stellzapfens umfasst. Der Rastbolzen umfasst eine in der Führungsbohrung angeordnete und den Stellzapfen abschnittsweise umschließende Druckfeder, die mit einem Ende an der vorstehenden Anlagefläche und mit dem anderen Ende an der Innenseite der Führungshülse anliegt. Die Führungsbohrung erstreckt sich dabei über die gesamte axiale Ausdehnung der Führungshülse, um die Druckfeder vollständig darin aufzunehmen.

Bevorzugt ist es, wenn die Druckfeder eine Länge hat, die derart ausgebildet ist, um den Sperrendabschnitt zumindest abschnittsweise aus der Führungshülse zu drücken. Der Sperrendabschnitt kann in der aus der Führungshülse abschnittweise gedrückten Position in einem Loch an dem Stativ in Eingriff gelangen.

Außerdem vorteilhaft ist es, wenn die Führungshülse ein Innengewinde umfasst, und wobei das Verschlussteil ein komplementär zu dem Innengewinde ausgebildetes Außengewinde umfasst. Dabei sind das Innengewinde und das Außengewinde derart ausgebildet, um durch Verschrauben des Außengewindes mit dem Innengewinde den Sperrendabschnitt in seiner axialen Position relativ zur Führungshülse festzustellen. Das Feststellen des Sperrendabschnitts durch Verschrauben des Außengewindes mit dem Innengewinde kann den Sperrendabschnitt in der an einem Loch an dem Stativ in Eingriff gelangten Position feststellen.

Es ist besonders bevorzugt, wenn die Führungshülse ein Verbindungsgewinde umfasst. Das Verbindungsgewinde ist dabei derart ausgebildet um den Rastbolzen an einem Stativ über ein an dem Stativ angeordnetes, zum Verbindungsgewinde komplementäres (Stativ-) Gewinde anzuordnen. Das Verbindungsgewinde ermöglicht die lösbare und gleichzeitig arretierbare Verbindung von Rastbolzen und Stativ.

Vorteilhafterweise ist an dem Verschlussteil ein Zugknopf (derart) fest angeordnet, um diesen relativ zur Führungshülse axial zu bewegen. Der Zugknopf muss dabei derart kraftschlüssig am Verschlussteil angeordnet sein, um bei axialer Bewegung des Zugknopfes die Federkraft der Druckfeder zu überwinden. Besonders bevorzugt hat der Zugknopf eine zylindrische Form der Länge 1 cm bis 5 cm und dem Durchmesser von 0,5 cm bis 3 cm.

Dabei ist besonders bevorzugt, dass der Zugknopf eine profilierte Betätigungsfläche umfasst. Die profilierte Betätigungsfläche ist hierbei als geriffelte Fläche ausgebildet.

Es ist ferner vorteilhaft, wenn das Verschlussteil eine gezahnte Außenfläche umfasst und wobei der Zugknopf eine komplementär zur Außenfläche gezahnte Innenfläche umfasst. Bei der festen Anordnung des Zugknopfes am Verschlussteil werden die gezahnte Außenfläche des Verschlussteils und die gezahnte Innenfläche des Zugknopf miteinander verzahnt.

Gemäß einem anderen technischen Aspekt umfasst die Erfindung ein Verfahren für das einhändige Arretieren eines Rastbolzens, umfassend den Schritt: in Kontakt bringen eines Verschlussteils mit einer Führungshülse durch eine axiale Bewegung eines Zugknopfes in Richtung der Führungshülse und drehen des Zugknopfes um das Verschlussteils mit der Führungshülse zu verschrauben.

Im Folgenden wird die Erfindung anhand der in den beigefügten Zeichnungen dargestellten Beispiele näher erläutert.

Es zeigen:
- Fig. 1: eine schematische Darstellung eines zusammengebauten Rastbolzens; und
- Fig. 2: eine Explosionszeichnung eines Rastbolzens.

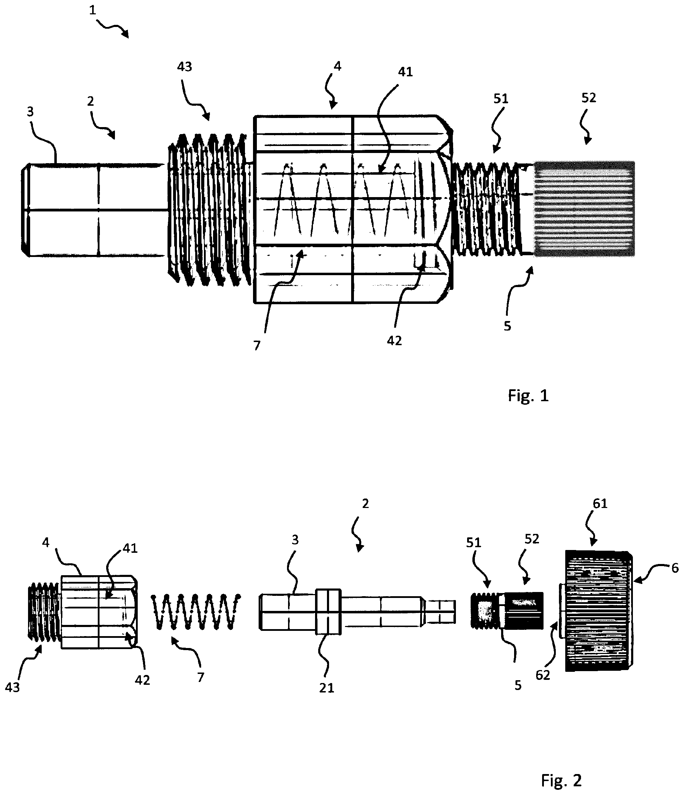

Es werden die beiden Figuren 1 und 2 im Folgenden zusammen beschrieben, da diese denselben Rastbolzen im ersten Fall in zusammengebauter Ansicht und im zweiten Fall in einer Explosionszeichnung zeigen.

In **Fig. 1 und 2** ist ein Rastbolzen 1 für ein Stativ zum Aufstellen von Musikboxen in zusammengebautem Zustand gezeigt. Dieser Rastbolzen 1 umfasst eine Führungshülse 4 und einen Stellzapfen 2 mit einem Sperrendabschnitt 3, der derart ausgebildet ist, um in einem Loch an dem Stativ in Eingriff zu gelangen. Ferner umfasst der Rastbolzen 1 ein Verschlussteil 5 zur Arretierung des Stellzapfens 2 in der Führungshülse 4.

Der Stellzapfen 2 umfasst eine vorstehende Anlagefläche 21 (in Fig. 2 gezeigt), welche vorstehende Anlagefläche 21 (in Fig. 2 gezeigt) an dem Sperrendabschnitt 3 angeordnet ist.

Die Führungshülse 4 umfasst eine innenliegende Führungsbohrung 41 zur Aufnahme des Stellzapfens 2. Der Rastbolzen 1 umfasst weiterhin eine in der Führungsbohrung 41 angeordnete und den Stellzapfen 2 abschnittsweise umschließende Druckfeder 7, welche Druckfeder 7 mit einem Ende an der vorstehenden Anlagefläche 21 und mit dem anderen Ende an der Innenseite der Führungshülse 4 anliegt.

Die Druckfeder 7 hat eine Länge, die derart ausgebildet ist, um den Sperrendabschnitt 3 zumindest abschnittsweise aus der Führungshülse 4 zu drücken.

Die Führungshülse 4 umfasst außerdem ein Innengewinde 42. Das Verschlussteil 5 umfasst ein komplementär zu dem Innengewinde 42 ausgebildetes Außengewinde 51. Dabei sind das Innengewinde 42 und das Außengewinde 51 derart ausgebildet, um durch Verschrauben des Außengewindes 51 mit dem Innengewinde 42 den Sperrendabschnitt 3 in seiner axialen Position relativ zur Führungshülse 4 festzustellen.

Die Führungshülse 4 umfasst ein Verbindungsgewinde 43, mit dessen Hilfe der Rastbolzen 1 an einem Stativ angeordnet werden kann.

An dem Verschlussteil 5 ist ein Zugknopf 6 (in Fig. 2 gezeigt) fest angeordnet, um diesen relativ zur Führungshülse 4 axial zu bewegen. Weiterhin umfasst der Zugknopf 6 (in Fig. 2 gezeigt) eine profilierte Betätigungsfläche 61 (in Fig. 2 gezeigt).

Das Verschlussteil 5 umfasst eine gezahnte Außenfläche 52 und der Zugknopf 6 (in Fig. 2 gezeigt) eine komplementär zur Außenfläche 52 gezahnte Innenfläche 62 umfasst.

Der Rastbolzen 1 ermöglicht ein Verfahren für das einhändige Arretieren eines Rastbolzens 1, umfassend den Schritt: in Kontakt bringen eines Verschlussteils 5 mit einer Führungshülse 4 durch eine axiale Bewegung eines Zugknopfes 6 in Richtung der Führungshülse 4 und Drehen des Zugknopfes 6 um das Verschlussteils 5 mit der Führungshülse 4 zu verschrauben.

## Patentansprüche

1. Rastbolzen (1) für ein Stativ zum Aufstellen von Musikboxen, welcher Rastbolzen (1) eine Führungshülse (4) und einen Stellzapfen (2) mit einem Sperrendabschnitt (3), der derart ausgebildet ist, um in einem Loch an dem Stativ in Eingriff zu gelangen, umfasst, und wobei der Rastbolzen (1) ferner ein Verschlussteil (5) zur Arretierung des Stellzapfens (2) in der Führungshülse (4) umfasst, wobei die Führungshülse ein Innengewinde (42) umfasst, und wobei das Verschlussteil (5) ein komplementär zu dem Innengewinde ausgebildetes Außengewinde (51) umfasst, und wobei das Innengewinde (42) und das Außengewinde (51) derart ausgebildet ist, um durch Verschrauben des Außengewindes (51) mit dem Innengewinde (42) den Sperrendabschnitt (3) in seiner axialen Position relativ zur Führungshülse (4) festzustellen, **dadurch gekennzeichnet, dass** die Führungshülse (4) ein Verbindungsgewinde (43) umfasst, mit dessen Hilfe der Rastbolzen (1) an einem Stativ angeordnet werden kann.

2. Rastbolzen (1) nach Anspruch 1, wobei der Stellzapfen (2) eine vorstehende Anlagefläche (21) umfasst.

3. Rastbolzen (1) nach Anspruch 1, wobei die Führungshülse (4) eine innenliegende Führungsbohrung (41) zur Aufnahme des Stellzapfens (2) umfasst, und wobei der Rastbolzen (1) eine in der Führungsbohrung (41) angeordnete und den Stellzapfen (2) abschnittsweise umschließende Druckfeder (7) umfasst, die mit einem Ende an der vorstehenden Anlagefläche (21) und mit dem anderen Ende an der Innenseite der Führungshülse (4) anliegend ausgebildet ist.

4. Rastbolzen (1) nach Anspruch 2, wobei die Druckfeder (7) eine Länge hat, die derart ausgebildet ist, um den Sperrendabschnitt (3) zumindest abschnittsweise aus der Führungshülse (4) zu drücken.

5. Rastbolzen (1) nach einem der vorangehenden Ansprüche, wobei an dem Verschlussteil (5) ein Zugknopf (6) fest angeordnet ist, um diesen relativ zur Führungshülse (4) axial zu bewegen.

6. Rastbolzen (1) nach Anspruch 5, wobei der Zugknopf (6) eine profilierte Betätigungsfläche (61) umfasst.

7. Rastbolzen (1) nach einem der Ansprüche 1 bis 5, wobei das Verschlussteil (5) eine gezahnte Außenfläche (52) umfasst, und wobei der Zugknopf (6) eine komplementär zur Außenfläche (52) gezahnte Innenfläche (62) umfasst.

## Claims

1. Locking bolt (1) for a tripod for setting up music boxes, which locking bolt (1) comprises a guide sleeve (4) and an adjusting pin (2) with a blocking end portion (3) which is embodied to come into engagement in a hole on the tripod, and wherein the locking bolt (1) further comprises a closure member (5) for arresting the adjusting pin (2) in the guide sleeve (4), wherein the guide sleeve comprises an internal thread (42), and wherein the closure member (5) comprises an external thread (51) being embodied in a complementary manner to the internal thread, and wherein the internal thread (42) and the external thread (51) are designed in such a way that, by screwing of the external thread (51) to the internal thread (42), the blocking end portion (3) is fixed in its axial position relative to the guide sleeve (4), **characterized in that** the guide sleeve (4) comprises a connecting thread (43) with the aid of which the locking bolt (1) can be arranged on a tripod.

2. Locking bolt (1) according to claim 1, wherein the adjusting pin (2) comprises a projecting bearing surface (21).

3. Locking bolt (1) according to claim 1, wherein the guide sleeve (4) comprises an internal guide bore (41) for receiving the adjusting pin (2), and wherein the locking bolt (1) comprises a compression spring (7) which is arranged in the guide bore (41) and encloses the adjusting pin (2) in sections and which is designed to rest with one end against the projecting bearing surface (21) and with the other end against the inside of the guide sleeve (4).

4. Locking bolt (1) according to claim 2, wherein the compression spring (7) has a length which is designed in such a way that the blocking end portion (3) is pressed out of the guide sleeve (4) at least in sections.

5. Locking bolt (1) according to one of the preceding claims, wherein a pull knob (6) is fixedly arranged on the closure member (5) to move the same axially relative to the guide sleeve (4).

6. Locking bolt (1) according to claim 5, wherein the pull knob (6) comprises a profiled actuating surface (61).

7. Locking bolt (1) according to any one of claims 1 to 5, wherein the closure member (5) comprises a serrated outer surface (52), and wherein the pull knob (6) comprises an inner surface (62) being serrated in a complementary manner to the outer surface (52).

## Revendications

1. Boulon de verrouillage (1) pour un trépied destiné à la mise en place de boîtes à musique, le boulon de verrouillage (1) comprenant une douille de guidage (4) et une cheville de réglage (2) avec une partie d'extrémité de blocage (3) qui est réalisée pour venir en prise dans un trou sur le trépied, le boulon de verrouillage (1) comprenant en outre un élément de fermeture (5) pour arrêter la cheville de réglage (2) dans la douille de guidage (4), dans lequel la douille de guidage comprend un filetage intérieur (42), et dans lequel l'élément de fermeture (5) comprend un filetage externe (51) étant réalisé de manière complémentaire au filetage intérieur, et dans lequel le filetage intérieur (42) et le filetage extérieur (51) sont conçus de telle manière que, en vissant le filetage extérieur (51) sur le filetage intérieur (42), la partie d'extrémité de blocage (3) est fixée dans sa position axiale par rapport à la douille de guidage (4), **caractérisé en ce que** la douille de guidage (4) comporte un filetage de raccordement (43) à l'aide duquel le boulon de verrouillage (1) peut être disposé sur un trépied.

2. Boulon de verrouillage (1) selon la revendication 1, dans lequel la cheville de réglage (2) présente une surface d'appui (21) en saillie.

3. Boulon de verrouillage (1) selon la revendication 1, dans lequel la douille de guidage (4) présente un alésage de guidage (41) intérieur pour recevoir la cheville de réglage (2), et le boulon de verrouillage (1) présentant un ressort de compression (7) disposé dans l'alésage de guidage (41), qui entoure par sections la cheville de réglage (2) et qui est conçu pour s'appuyer par une extrémité sur la surface d'appui (21) en saillie et par l'autre extrémité sur la face intérieure de la douille de guidage (4).

4. Boulon de verrouillage (1) selon la revendication 2, dans lequel le ressort de compression (7) a une longueur qui est conçue de telle manière que la partie d'extrémité de blocage (3) est pressée hors de la douille de guidage (4) au moins par sections.

5. Boulon de verrouillage (1) selon l'une des revendications précédentes, dans lequel une tirette (6) est disposé de manière fixe sur l'élément de fermeture (5) de manière à déplacer celui-ci axialement par rapport à la douille de guidage (4).

6. Boulon de verrouillage (1) selon la revendication 5, dans lequel la tirette (6) comporte une surface d'actionnement (61) profilée.

7. Boulon de verrouillage (1) selon l'une quelconque des revendications 1 à 5, dans lequel l'élément de fermeture (5) comprend une surface extérieure dentelée (52), et dans lequel la tirette (6) comprend une surface intérieure (62) étant dentelée de manière complémentaire à la surface extérieure (52).
